# FASCICULE DE BREVET EUROPEEN

(11) **EP 3 419 857 B1**
(45) Date de publication et mention de la délivrance du brevet: **04.11.2020**
(21) Numéro de dépôt: 17711710.8
(22) Date de dépôt: 24.02.2017
(51) Int. Cl.: B60N 2/58

(54) **COIFFE DE REVÊTEMENT D'UNE MATELASSURE DE GARNISSAGE D'UN ÉLÉMENT DE SIÈGE DE VÉHICULE AUTOMOBILE**
VERKLEIDUNG FÜR EINE POLSTERUNG EINES KRAFTFAHRZEUGSITZELEMENTS
COVER FOR LINING UPHOLSTERY PADDING OF A MOTOR VEHICLE SEAT ELEMENT

(30) Priorité: 25.02.2016 FR 1651566
(43) Date de publication de la demande: 02.01.2019
(73) Titulaire: TESCA France, 75008 Paris (FR)
(72) Inventeur: BLAY, Bernard, 60280 Bienville (FR); GUSTIN, José, 08310 Machault (FR)
(74) Mandataire: Sayettat, Julien Christian
(86) Numéro de dépôt international: PCT/FR2017/050421
(87) Numéro de publication internationale: WO 2017/144831

(56) Documents cités:
- DE-A1-102009 013 863
- DE-U1- 20 307 988
- FR-A1- 2 983 112
- US-A1- 2013 147 228

## Description

L'invention concerne une coiffe de revêtement d'une matelassure de garnissage d'un élément de siège de véhicule automobile, une matelassure comprenant une telle coiffe et un élément comprenant une telle matelassure.

Il est connu, comme par exemple divulgué par le document FR 2 983 112 A1, de réaliser une coiffe de revêtement d'une matelassure de garnissage d'un élément de siège de véhicule automobile, ladite coiffe comprenant :
- un premier et un deuxième empiècement de revêtement associés l'un à l'autre par une couture de liaison formant un talon saillant vers l'intérieur de ladite coiffe,
- une première et une deuxième couture d'aspect réalisées respectivement dans lesdits premier et deuxième empiècements à proximité de ladite couture de liaison et parallèlement à elle.

La mise en place de coutures d'aspect telle que décrites ci-dessus répond à un impératif esthétique demandé en sellerie automobile où il peut être souhaité que la matelassure comprenne une ou plusieurs coutures visibles, ce qui n'est pas le cas des coutures de liaison.

On précise ici que, par le terme de « talon », on entend la partie de la coiffe comprenant deux épaisseurs d'empiècements qui s'étend entre la couture de liaison et les bords desdits empiècements, lesdits bords étant disposés bord à bord.

Selon les réalisations connues, le talon de couture présente une largeur minimum de 5 mm, voire bien davantage, par exemple de l'ordre de 10 mm.

Après réalisation de la couture d'aspect, on a donc une partie du revêtement qui n'est d'aucune utilité pour le produit, et qui est donc perdue.

Sachant qu'un revêtement présente usuellement un coût important, il en résulte un surcoût pour le produit obtenu.

En outre, un talon de largeur importante entraîne une réalisation difficile de la couture d'aspect dans les zones courbes, obligeant à réaliser des découpes dans ledit talon - par exemple sous forme d'entailles en V - au niveau desdites zones courbes.

On pourrait envisager de réduire la largeur du talon, par exemple en la ramenant à 3 mm, ce qui permettrait de réaliser les économies attendues.

Cependant, dans une telle situation, se présente le risque que, quand une traction est effectuée de part et d'autre sur les empiècements, par exemple du fait d'un appui brutal de la part d'un occupant du siège, la couture de liaison soit sollicitée au point de rejoindre au moins un bord libre d'un empiècement et conduire à sa déchirure.

L'invention a pour but de pallier ces inconvénients.

A cet effet, et selon un premier aspect, l'invention propose une coiffe de revêtement d'une matelassure de garnissage d'un élément de siège de véhicule automobile, ladite coiffe comprenant :
- un premier et un deuxième empiècement de revêtement associés l'un à l'autre par une couture de liaison formant un talon saillant vers l'intérieur de ladite coiffe,
- une première et une deuxième couture d'aspect réalisées respectivement dans lesdits premier et deuxième empiècements à proximité de ladite couture de liaison et parallèlement à elle,
ladite coiffe présentant en outre les caractéristiques suivantes :
- ledit talon présente une largeur généralement inférieure ou égale à 4 mm,
- elle comprend en outre une bande de renfort, ladite bande s'étendant le long desdites coutures en envers desdits empiècements, ladite bande étant sensiblement non étirable selon sa largeur,
- ladite bande est fixée auxdits empiècements par lesdites coutures d'aspect,
- la largeur développée de la zone de ladite bande située entre lesdites coutures d'aspect est agencée de sorte que ladite bande reprenne les efforts, afin que ladite couture de liaison ne soit pas sollicitée, quand une traction est effectuée de part et d'autre sur lesdits empiècements.

On précise que par la largeur du talon, on entend la distance entre la couture de liaison et les bords des empiècements.

Quand il est dit que le talon présente une largeur généralement inférieure ou égale à 4 mm, il convient de comprendre que cela s'applique sensiblement à toute la longueur de la bande, sachant qu'on peut observer de façon ponctuelle un écart à cette spécification, par exemple dans une zone recourbée.

Par ailleurs, quand on parle de largeur développée, il s'agit de la largeur mesurée après mise à plat de l'élément sur lequel est faite la mesure.

L'agencement proposé permet de réduire la largeur du talon puisque, quand une traction est effectuée de part et d'autre sur les empiècements, c'est la bande de renfort non étirable selon sa largeur qui est sollicitée en traction et non la couture de liaison.

Il en résulte une diminution de la consommation de revêtement, la bande étant réalisée à partir d'un matériau de faible coût tel qu'un non tissé, ceci permettant de diminuer d'autant le coût du produit fini.

Selon d'autres aspects, l'invention propose une matelassure comprenant une telle coiffe et un élément de siège de véhicule automobile comprenant une telle matelassure.

D'autres particularités et avantages de l'invention apparaîtront dans la description qui suit, faite en référence aux figures jointes, dans lesquelles :
- les figures 1a et 1b sont des coupes transversales schématiques partielles d'une coiffe selon une réalisation, en l'absence de traction sur les empiècements (1a) et lorsqu'une traction est effectuée de part et d'autre sur lesdits empiècements (1b),

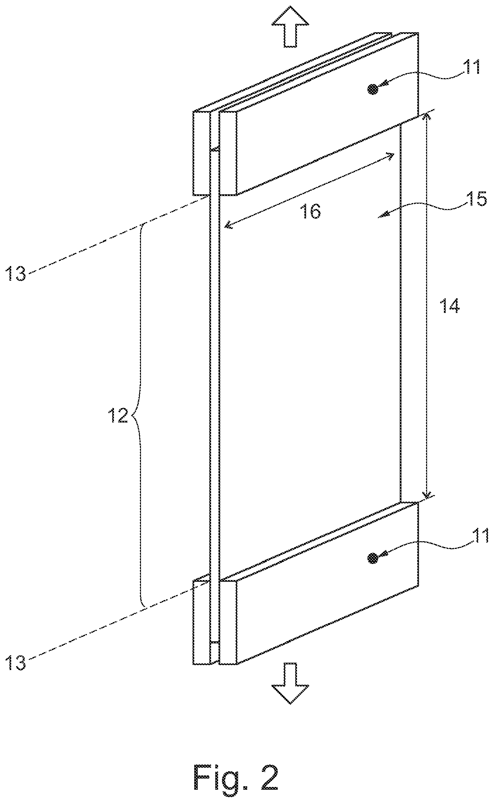

- la figure 2 est une vue schématique en perspective d'un échantillon de bande de renfort soumis à un essai de résistance à la rupture.

En référence aux figures, on décrit une coiffe 1 de revêtement d'une matelassure de garnissage d'un élément de siège de véhicule automobile - tel un appui-tête, une assise ou un dossier dudit siège -, ladite coiffe comprenant :
- un premier 2 et un deuxième 3 empiècement de revêtement associés l'un à l'autre par une couture de liaison 4 formant un talon 5 saillant vers l'intérieur de ladite coiffe,
- une première 6 et une deuxième 7 couture d'aspect réalisées respectivement dans lesdits premier et deuxième empiècements à proximité de ladite couture de liaison et parallèlement à elle,
ladite coiffe présentant en outre les caractéristiques suivantes :
- ledit talon présente une largeur 8 généralement inférieure ou égale à 4 mm,
- elle comprend en outre une bande de renfort 9, ladite bande s'étendant le long desdites coutures en envers desdits empiècements, ladite bande étant sensiblement non étirable selon sa largeur,
- ladite bande est fixée auxdits empiècements par lesdites coutures d'aspect,
- la largeur développée 20 la zone de ladite bande située entre lesdites coutures d'aspect est agencée de sorte que ladite bande reprenne les efforts, afin que ladite couture de liaison ne soit pas sollicitée, quand une traction est effectuée de part et d'autre sur lesdits empiècements.

Selon une réalisation, la bande 9 est agencée de sorte que, lorsqu'un échantillon 15 de ladite bande, de longueur 16 égale à 50 mm, est soumis aux conditions d'essai suivantes :
- température de 23°C±2°C,
- taux d'humidité relative de 50%±5%,
- ledit échantillon est pris de part et d'autre de sa largeur par deux jeux de mors 11 le pinçant sur toute sa longueur 16, de manière à définir une zone dudit échantillon non pincée 12 située entre lesdits jeux, ladite zone étant délimitée longitudinalement par deux droites 13 parallèles, la largeur développée 14 de ladite zone étant uniforme sur toute la longueur 16 dudit échantillon,
- lesdits jeux sont actionnés en translation transversale en éloignement l'un de l'autre, de manière à tendre uniformément ledit échantillon, à une vitesse de 100 mm/min ± 10 mm/min, jusqu'à rupture dudit échantillon,
la résistance à la rupture dudit échantillon est supérieure ou égale à 10 DaN, et notamment supérieure ou égale à 14 DaN.

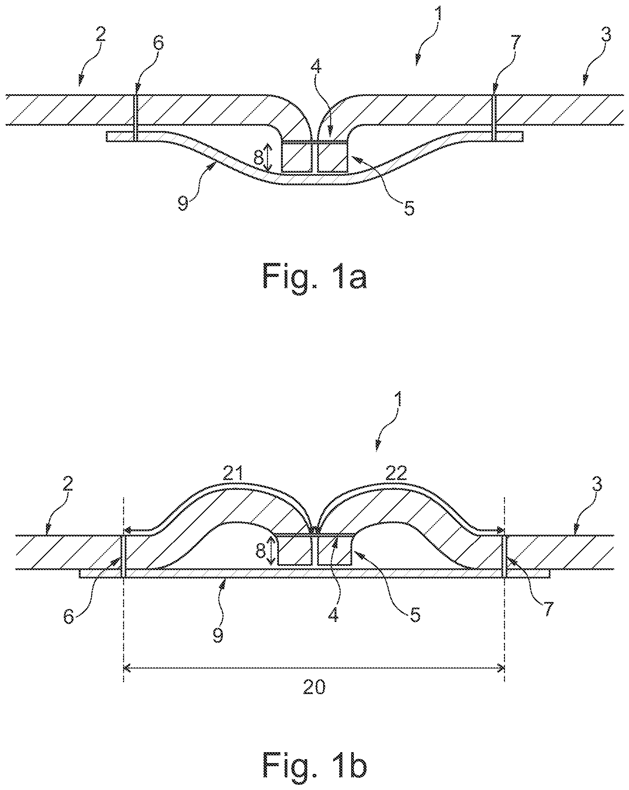

Selon la réalisation représentée, comme on le voit en particulier sur la figure 1b, la largeur développée 20 de la zone de la bande 9 située entre les coutures d'aspect 6,7 est inférieure ou égale à la somme de la distance développée 21 séparant, sur le premier empiècement 2, la couture de liaison 4 de la première couture 6 et de la distance développée 22 séparant, sur le deuxième empiècement 3, ladite couture de liaison de la deuxième couture 7, ce qui permet de garantir une reprise des efforts par ladite bande quand une traction est effectuée de part et d'autre sur lesdits empiècements.

Selon une réalisation, la largeur de la bande 9 est inférieure à 30 mm.

Selon une réalisation, la bande 9 est à base de non tissé calandré à chaud.

On décrit à présent, de façon non représentée, une matelassure comprenant une telle coiffe 1 et un bloc de rembourrage élastiquement compressible, notamment à base de mousse de polyuréthanne, ladite coiffe étant chaussée sur ledit bloc.

Quand il est dit que la coiffe 1 est chaussée sur le bloc, cela signifie qu'elle est simplement enfilée dessus, sans qu'il y ait de cohésion entre ladite coiffe et ledit bloc, que ce soit par exemple par surmoulage ou par collage.

On décrit enfin, de façon non représentée un élément de siège de véhicule automobile comprenant une telle matelassure et une armature, notamment métallique, ladite matelassure étant associée à ladite armature de manière à la garnir pour recevoir un passager.

## Revendications

1. Coiffe (1) de revêtement pour une matelassure de garnissage d'un élément de siège de véhicule automobile, ladite coiffe comprenant :
• un premier (2) et un deuxième (3) empiècement de revêtement associés l'un à l'autre par une couture de liaison (4) formant un talon (5) saillant vers l'intérieur de ladite coiffe,
• une première (6) et une deuxième (7) couture d'aspect réalisées respectivement dans lesdits premier et deuxième empiècements à proximité de ladite couture de liaison et parallèlement à elle,
ladite coiffe étant **caractérisée en ce que** :
• ledit talon présente une largeur (8) généralement inférieure ou égale à 4 mm,
• elle comprend en outre une bande de renfort (9), ladite bande s'étendant le long desdites coutures en envers desdits empiècements, ladite bande étant sensiblement non étirable selon sa largeur,
• ladite bande est fixée auxdits empiècements par lesdites coutures d'aspect,
• la largeur développée (20) de la zone de ladite bande située entre lesdites coutures d'aspect est agencée de sorte que ladite bande reprenne les efforts, afin que ladite couture de liaison ne soit pas sollicitée, quand une traction est effectuée de part et d'autre sur lesdits empiècements.

2. Coiffe selon la revendication 1, **caractérisée en ce que** la bande (9) est agencée de sorte que, lorsqu'un échantillon (15) de ladite bande, de longueur (16) égale à 50 mm, est soumis aux conditions d'essai suivantes :
• température de 23°C±2°C,
• taux d'humidité relative de 50%±5%,
• ledit échantillon est pris de part et d'autre de sa largeur par deux jeux de mors (11) le pinçant sur toute sa longueur (16), de manière à définir une zone dudit échantillon non pincée (12) située entre lesdits jeux, ladite zone étant délimitée longitudinalement par deux droites (13) parallèles, la largeur développée (14) de ladite zone étant uniforme sur toute la longueur (16) dudit échantillon,
• lesdits jeux sont actionnés en translation transversale en éloignement l'un de l'autre, de manière à tendre uniformément ledit échantillon, à une vitesse de 100 mm/min ± 10 mm/min, jusqu'à rupture dudit échantillon,
la résistance à la rupture dudit échantillon est supérieure ou égale à 10 DaN.

3. Coiffe selon la revendication 2, **caractérisée en ce que** la résistance à la rupture de l'échantillon (15) est supérieure ou égale à 14 DaN.

4. Coiffe selon l'une quelconque des revendications 1 à 3, **caractérisée en ce que** la largeur développée (20) de la zone de la bande (9) située entre les coutures d'aspect (6,7) est inférieure ou égale à la somme de la distance développée (21) séparant, sur le premier empiècement (2), la couture de liaison (4) de la première couture (6) et de la distance développée (22) séparant, sur le deuxième empiècement (3), ladite couture de liaison de la deuxième couture (7).

5. Coiffe selon l'une quelconque des revendications 1 à 4, **caractérisée en ce que** la largeur de la bande (9) est inférieure à 30 mm.

6. Coiffe selon l'une quelconque des revendications 1 à 5, **caractérisée en ce que** la bande (9) est à base de non tissé calandré à chaud.

7. Matelassure comprenant une coiffe selon l'une quelconque des revendications 1 à 6 et un bloc de rembourrage élastiquement compressible, ladite coiffe étant chaussée sur ledit bloc.

8. Elément de siège de véhicule automobile comprenant une matelassure selon la revendication 7 et une armature, ladite matelassure étant associée à ladite armature de manière à la garnir pour recevoir un passager.

## Patentansprüche

1. Abdeckung (1) zur Auskleidung einer Polsterung eines Kraftfahrzeugsitzelements, wobei die Abdeckung umfasst:
• einen ersten (2) und einen zweiten (3) Auskleidungseinsatz, die durch eine Verbindungsnaht (4), die einen vorstehenden, nach innen gerichteten Absatz (5) der Abdeckung bildet, miteinander verknüpft sind,
• eine erste (6) und eine zweite (7) Sichtnaht, die jeweils in dem ersten und zweiten Einsatz in der Nähe der Verbindungsnaht und parallel dazu realisiert werden,
wobei die Abdeckung **dadurch gekennzeichnet ist, dass**:
• der Absatz eine Breite (8), im Allgemeinen kleiner oder gleich 4 mm aufweist,
• sie weiter ein Verstärkungsband (9) umfasst, wobei sich das Band entlang der Nähte an der Rückseite der Einsätze erstreckt, wobei das Band im Wesentlichen in seiner Breite nicht streckbar ist,
• das Band durch die Sichtnähte an den Einsätzen befestigt ist,
• die entwickelte Breite (20) der Zone des Bandes, die sich zwischen den Sichtnähten befindet, derart angeordnet ist, dass das Band die Kräfte aufnimmt, damit die Verbindungsnaht nicht beansprucht wird, wenn ein Zug beiderseits der Einsätze durchgeführt wird.

2. Abdeckung nach Anspruch 1, **dadurch gekennzeichnet, dass** das Band (9) derart angeordnet ist, dass wenn ein Muster (15) des Bandes, in einer Länge (16) gleich 50 mm, den folgenden Versuchsbedingungen ausgesetzt ist:
• Temperatur von 23 °C ± 2 °C,
• Relative Luftfeuchtigkeit von 50 % ± 5 %,
• das Muster beiderseits seiner Breite durch zwei Backensätze (11), die es über ihre gesamte Länge (16) klemmen, aufgenommen wird, um eine Zone des nicht geklemmten Musters (12), die sich zwischen den Sätzen befindet, zu definieren, wobei die Zone in Längsrichtung durch zwei parallele Gerade (13) begrenzt wird, wobei die entwickelte Breite (14) der Zone über die gesamte Länge (16) des Musters einheitlich ist,
• die Sätze in Querverschiebung voneinander weg, um das Muster gleichförmig zu spannen, mit einer Geschwindigkeit von 100 mm/min ± 10 mm/min bis zum Bruch des Musters betätigt werden,
die Bruchfestigkeit des Musters größer oder gleich 10 DaN ist.

3. Abdeckung nach Anspruch 2, **dadurch gekennzeichnet, dass** die Bruchfestigkeit des Musters (15) größer oder gleich 14 DaN ist.

4. Abdeckung nach einem der Ansprüche 1 bis 3, **dadurch gekennzeichnet, dass** die entwickelte Breite (20) der Zone des Bandes (9), die sich zwischen den Sichtnähten (6, 7) befindet, kleiner oder gleich der Summe des entwickelten Abstands (21), der auf dem ersten Einsatz (2) die Verbindungsnaht (4) von der ersten Naht (6) trennt, und des entwickelten Abstands (22) ist, der auf dem zweiten Einsatz (3) die Verbindungsnaht von der zweiten Naht (7) trennt.

5. Abdeckung nach einem der Ansprüche 1 bis 4, **dadurch gekennzeichnet, dass** die Breite des Bandes (9) kleiner als 30 mm ist.

6. Abdeckung nach einem der Ansprüche 1 bis 5, **dadurch gekennzeichnet, dass** das Band (9) auf Basis von heiß kalandriertem Vlies ist.

7. Polsterung, umfassend eine Abdeckung nach einem der Ansprüche 1 bis 6, und einen elastisch komprimierbaren Füllungsblock, wobei die Abdeckung auf dem Block aufgezogen ist.

8. Kraftfahrzeugsitzelement, umfassend eine Polsterung nach Anspruch 7 und eine Armatur, wobei die Polsterung der Armatur zugeordnet ist, um sie zu füllen, um einen Fahrgast aufzunehmen.

## Claims

1. Cover (1) for lining upholstery padding of a motor vehicle seat element, said cover comprising:
- a first (2) and a second (3) lining section joined together by a connecting seam (4) forming a heel (5) protruding towards the inside of said cover,
- a first (6) and a second (7) decorative seam made respectively in said first and second sections near said connecting seam and parallel thereto,
said cover being **characterised in that**:
- said heel has a width (8) generally less than or equal to 4 mm,
- it further comprises a reinforcing strip (9), said strip extending along said seams on the underside of said sections, said strip being substantially non-stretchable across its width,
- said strip is fastened to said sections by said decorative seams,
- the developed width (20) of the area of said strip located between said decorative seams is arranged such that said strip absorbs forces, so that said connecting seam is not stressed, when traction is exerted on either side on said sections.

2. Cover according to claim 1, **characterised in that** the strip (9) is arranged such that, when a sample (15) of said strip, of length (16) equal to 50 mm, is submitted to the following test conditions:
- temperature of 23°C ± 2°C,
- relative humidity level of 50% ± 5%,
- said sample is taken on either side of its width by two sets of jaws (11) clamping it over its entire length (16), so as to define an area of said non-clamped sample (12) located between said sets, said area being delimited longitudinally by two parallel straight lines (13), the developed width (14) of said area being uniform over the entire length (16) of said sample,
- said sets are actuated in transverse translation away from one another, so as to uniformly tension said sample, at a speed of 100 mm/min ± 10mm/min, until tearing of said sample, the tear strength of said sample is greater than or equal to 10 DaN.

3. Cover according to claim 2, **characterised in that** the tear strength of the sample (15) is greater than or equal to 14 DaN.

4. Cover according to any one of claims 1 to 3, **characterised in that** the developed width (20) of the area of the strip (9) located between the decorative seams (6, 7) is less than or equal to the sum of the developed distance (21) separating, on the first section (2), the connecting seam (4) from the first seam (6) and the developed distance (22) separating, on the second section (3), said connecting seam from the second seam (7).

5. Cover according to any one of claims 1 to 4, **characterised in that** the width of the strip (9) is less than 30 mm.

6. Cover according to any one of claims 1 to 5, **characterised in that** the strip (9) is based on a heat-calendered nonwoven fabric.

7. Padding comprising a cover according to any one of claims 1 to 6 and an elastically compressible cushion block, said cover being fitted on said block.

8. Motor vehicle seat element comprising a padding according to claim 7 and a frame, said padding being associated with said frame so as to upholster it to receive a passenger.
